# EUROPÄISCHE PATENTSCHRIFT

(11) **EP 1 245 419 B1**
(45) Veröffentlichungstag und Bekanntmachung des Hinweises auf die Patenterteilung: **28.05.2003**
(21) Anmeldenummer: 02003687.7
(22) Anmeldetag: 19.02.2002
(51) Int. Cl.: B60J 7/22

(54) **Cabriolet-Fahrzeug mit einem Windschott**
Convertible vehicle with a wind deflector
Véhicule convertible avec un déflecteur de vent

(30) Priorität: 19.03.2001 DE 10113427
(43) Veröffentlichungstag der Anmeldung: 02.10.2002
(73) Patentinhaber: CTS Fahrzeug-Dachsysteme GmbH, 21079 Hamburg (DE)
(72) Erfinder: Wezyk, Wojciech, 71065 Sindelfingen (DE); Halbweiss, Thomas, 71686 Remseck (DE)
(74) Vertreter: Müller, Gottfried

(56) Entgegenhaltungen:
- DE-A- 4 320 603
- DE-A- 4 338 102
- DE-A- 19 646 240
- DE-A- 19 913 033
- US-A- 5 658 039

## Beschreibung

Die Erfindung bezieht sich auf ein Cabriolet-Fahrzeug mit einem Windschott nach dem Oberbegriff des Anspruches 1. Ein Fahrzeug dieser Art ist in DE 19 913 033 A1 offenbart. In Cabriolet-Fahrzeugen ist üblicherweise zwischen den Fahrzeug-Vordersitzen bzw. unmittelbar hinter den Fahrzeugvordersitzen ein Windschott angeordnet, welches bei geöffnetem Fahrzeugdach Luftturbulenzen im Fahrzeuginnenraum vermeiden bzw. reduzieren helfen soll. Aus der Druckschrift DE 198 30 699 A1 ist ein derartiges Windschott bekannt, das um eine Querachse quer zur Fahrzeuglängsachse zwischen einer horizontalen Außerfunktionsstellung und einer vertikalen Funktionsstellung verschwenkt werden kann. Dieses Windschott ist über die Schwenkbewegung vergleichsweise einfach zwischen der vertikalen Funktionsstellung und der horizontalen Außerfunktionsstellung zu verstellen. Es ist bei der Öffnungs- und Schließbewegung des Fahrzeugdaches zur Vermeidung von Teilekollisionen jedoch darauf zu achten, dass das Windschott sowohl in horizontaler als auch in vertikaler Stellung nicht im Bewegungsraum des Fahrzeugdaches liegt und auch den das Fahrzeugdach in Cabrioletstellung aufnehmenden Stauraum weder in unzulässiger Weise einschränkt noch die Stauraumöffnung behindert.

Die Druckschrift DE 199 13 033 A1 offenbart die Verwendung einer Heckscheibe als Windschott, indem die Heckscheibe aus ihrer Position im Fahrzeugdach gelöst und in fahrzeugfesten Führungsbahnen vertikal abgesenkt bzw. angehoben werden kann. Es ist zwar aus dieser Druckschrift die Verwendung der Heckscheibe mit Doppelfunktion als Windschott auch in einem Hardtop bekannt, jedoch wird auf die bei Hardtops bestehende Ablageproblematik in Cabrioletstellung nicht eingegangen. Üblicherweise werden die starren Dachschalen eines Hardtops zum Verstauen in einem heckseitigen Ablageraum nach hinten verschwenkt, wodurch die Dachschalen übereinander liegend zur Ablage kommen und etwa parallel zueinander ausgerichtet sind, jedoch mit ihrer Dachfläche näherungsweise eben abgelegt sind. Diese Ablagesituation erfordert in Fahrzeuglängsrichtung gesehen einen relativ großen Ablageraum, wodurch der frei nutzbare Kofferraum eingeschränkt wird.

Der Erfindung liegt das Problem zugrunde, ein Cabriolet-Fahrzeug mit einem Hardtop-Fahrzeugdach mit einem Windschott konstruktiv einfach und in Cabrioletposition platzsparend auszuführen.

Dieses Problem wird erfindungsgemäß mit den Merkmalen des Anspruches 1 gelöst. Die Unteransprüche enthalten zweckmäßige Weiterbildungen.

Die Heckscheibe ist lösbar in einer Ausnehmung im Fahrzeugdach aufgenommen und kann aus dieser in Cabrioletposition aus dem Fahrzeugdach herausgelöst werden und als Windschott eingesetzt werden. Die aus der Ausnehmung herauslösbare Heckscheibe eröffnet die Möglichkeit, die Heckscheibe in Cabrioletposition des Fahrzeugdaches als Windschott einzusetzen, in welcher die Heckscheibe in einer über die Fahrzeug-Karosserielinie herausragenden Position hinter oder zwischen den Fahrzeugsitzen aufgestellt ist. Die Heckscheibe übernimmt eine Doppelfunktion als Scheibe in Schließposition des Fahrzeuges und als Windschott in Cabrioletposition. Ein zusätzliches Bauteil, welches eine Windschottfunktion übernimmt, kann entfallen.

Die zweckmäßig aus Glas oder aus durchsichtigem Kunststoff bestehende Heckscheibe weist bevorzugt eine eigene Heckscheibenkinematik auf, die unabhängig von den Dachteilen bzw. der Stellkinematik der Dachteile ausgeführt und über die die Heckscheibe unmittelbar an die Fahrzeugkarosserie angekoppelt ist. Vorteilhaft ermöglicht die Heckscheibenkinematik ein Absenken in den Stauraum, um bei der Überführung des Fahrzeugdaches zwischen Schließ- und Cabrioletposition eine Kollision mit dem Fahrzeugdach zu vermeiden.

Die Heckscheibe ist in Schließposition des Daches vom Fahrzeugdach zumindest teilweise umgriffen und lösbar in der Ausnehmung im Fahrzeugdach aufgenommen. Das Fahrzeugdach umgreift die Heckscheibe vorteilhaft sowohl im Bereich von deren Seitenkante als auch im Bereich der Heckscheiben-Oberkante, wobei der die Seitenkante übergreifende Abschnitt vorteilhaft zugleich die C-Säule im Fahrzeugdach bildet.

Das Fahrzeugdach ist vorteilhaft längsgeteilt, wobei zumindest zwei Dachteile vorgesehen sind, welche sich in Schließposition des Fahrzeugdaches im Wesentlichen links und rechts einer Längs-Trennachse erstrecken, welche etwa parallel zur Fahrzeuglängsachse verläuft und somit mit der Fahrzeuglängsachse in einer gemeinsamen Ebene liegt. Auf Grund der Längsteilung des Fahrzeugdaches ist es insbesondere bei Fahrzeugen mit einem in Längsrichtung verhältnismäßig kurzen Fahrzeuginnenraum, also beispielsweise bei zweisitzigen Cabrioletfahrzeugen, möglich, die Länge der Dachteile gering zu halten, wodurch im Vergleich zu bisher bekannten Cabrioletfahrzeugen mit sich in Querrichtung erstreckenden Dachteilen eine geringere Absolutlänge der Dachteile erzielt werden kann und dementsprechend auch ein kleineres Staumaß in Cabrioletstellung benötigt wird. Da die Breite jedes Dachteiles bei Verwendung von insgesamt zwei Dachteilen üblicherweise etwa der halben Fahrzeugbreite entspricht, kann auf diese Weise der Stauraum verhältnismäßig klein gehalten werden.

Es wird hierdurch die Möglichkeit eröffnet, die Dachteile in Cabrioletposition in einer anderen Ausrichtung abzulegen als in Schließposition des Fahrzeugdaches. Beispielsweise kann es vorteilhaft sein, die Dachteile in Cabrioletposition in Fahrzeuglängsrichtung hintereinander liegend im Stauraum abzulegen, wobei in diesem Fall bei der Überführung von Schließ- in Cabrioletposition die Dachteile um etwa 90° um eine Hochachse nach innen verschwenkt werden können, um die hintereinander liegende Position einzunehmen, bei der vorteilhaft die beiden Dachteile unmittelbar ohne sonstige zwischenliegende Dachteile aufeinander folgend abgelegt sind. In Cabrioletposition liegen die Dachteile in diesem Fall quer zur Fahrzeuglängsachse, wobei in bevorzugter Weiterbildung die Dachteile eine aufgestellte Position einnehmen, in der die Dachteilebene näherungsweise vertikal ausgerichtet ist. Die aufgestellte Position kann durch eine zusätzliche Drehung um eine Querachse erzielt werden, wobei vorteilhaft eine Kombination beider Schwenkbewegungen um räumliche Schwenkachsen durchgeführt wird.

Bei einer Querablage der Dachteile ist insbesondere in Fahrzeuglängsrichtung nur ein geringes Staumaß im Stauraum erforderlich, so dass der Stauraum entsprechend schmal ausgebildet sein kann und dementsprechend auch nur eine schmale Öffnung aufweist, über die die Dachteile in den Stauraum eingeführt werden. Daraus ergibt sich der zusätzliche Vorteil, dass auf einen Zusatzantrieb des Heckdeckels zur Freigabe einer großen Stauraumöffnung verzichtet werden kann.

Zur Überführung in Cabrioletstellung können die Dachteile zusätzlich zur Verschwenkung auch nach hinten in Richtung Fahrzeugheck verstellt werden, insbesondere translatorisch verschoben werden.

Die die Heckscheibe in Schließposition aufnehmende Ausnehmung in den Dachteilen kann für eine besonders kompakte Ablageposition genutzt werden, indem in Cabrioletposition des Fahrzeugdaches Radkästen des Fahrzeugs, welche in den Stauraum einragen, von den Ausnehmungen übergriffen werden, wodurch das beschränkte Raumangebot zur Ablage des Fahrzeugdaches in optimaler Weise ausgenutzt wird.

Weitere Vorteile und zweckmäßige Ausführungen sind den weiteren Ansprüchen, der Figurenbeschreibung und den Zeichnungen zu entnehmen. Es zeigen:
- Fig. 1: ein Cabriolet-Fahrzeug mit einem längsgeteilten Hardtop-Fahrzeugdach, dargestellt in Schließposition, jedoch mit abgesenkter Heckscheibe,
- Fig. 2: das Fahrzeugdach in einer Zwischenstellung zwischen Schließ- und Cabrioletposition,
- Fig. 3: das Fahrzeugdach in Cabrioletposition mit aufgestellter, die Funktion eines Windschotts übernehmender Heckscheibe,
- Fig. 4: einen Schnitt durch den Stauraum des Fahrzeuges in Cabrioletposition mit abgelegtem Hardtop-Fahrzeugdach und aufgestellter Heckscheibe.

In den folgenden Figuren sind gleiche Bauteile mit gleichen Bezugszeichen versehen.

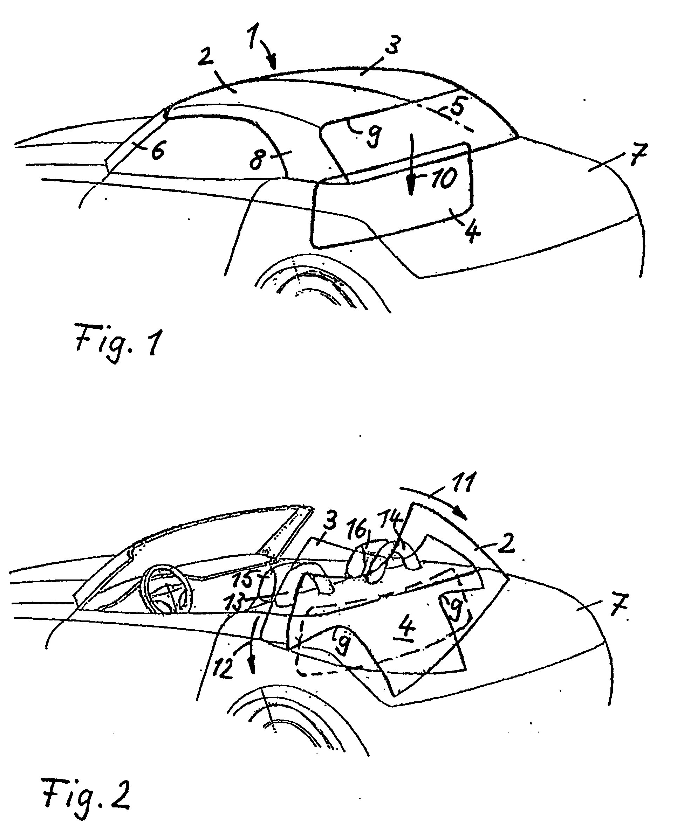

Das in Fig. 1 in Schließposition dargestellte Hardtop-Fahrzeugdach ist längsgeteilt und besteht aus zwei in sich starren Dachteilen 2 und 3, die in Schließposition sich beidseitig einer Längs-Trennachse 5 erstrecken, welche etwa parallel zur Fahrzeuglängsachse verläuft und mit dieser eine gemeinsame Ebene einschließt. Die Trennlinie bzw. Trennachse 5 liegt vorteilhaft in der Längs-Mittelebene des Fahrzeugs, die Dachteile 2 und 3 sind spiegelsymmetrisch zur Längs-Trennachse 5 ausgebildet. Im Bereich der Trennachse 5 sind die Dachteile 2 und 3 in Querrichtung wind- und wasserdicht aneinander gefügt, wobei eine die beiden Dachteile 2 und 3 in Querrichtung zusammenhaltende Klammer oder ein ähnliches Bauteil vorgesehen sein kann, um die Dichtwirkung zu verbessern. Jedes der Dachteile 2 und 3 erstreckt sich in Fahrzeuglängsrichtung im Wesentlichen über den gesamten Fahrzeuginnenraum zwischen Windschutzscheibenrahmen 6 und einem Heckdeckel 7, welcher einen darunter liegenden Kofferraum überdeckt. Jedes Dachteil 2 bzw. 3 ist insbesondere einteilig ausgeführt und umfasst einen seitlichen, hinteren Abschnitt, welcher in Schließposition eine C-Säule 8 bildet.

Das Hardtop-Fahrzeugdach 1 umfasst eine Heckscheibe 4, die in Schließposition in einer Ausnehmung 9 im rückwärtigen Bereich der Dachteile 2 und 3 aufgenommen ist. Die beiden Ausnehmungen 9 in jedem Dachteil 2 bzw. 3 ergänzen sich zu einer Gesamtfläche, welche genau der Fläche der Heckscheibe 4 entspricht. In Schließstellung grenzt die Heckscheibe 4 mit jeweils einer Seitenkante an die C-Säule 8 jedes Dachteils 2 bzw. 3 und mit der Oberkante an den quer verlaufenden, die Ausnehmung 9 nach oben begrenzenden Abschnitt der Dachteile 2 und 3.

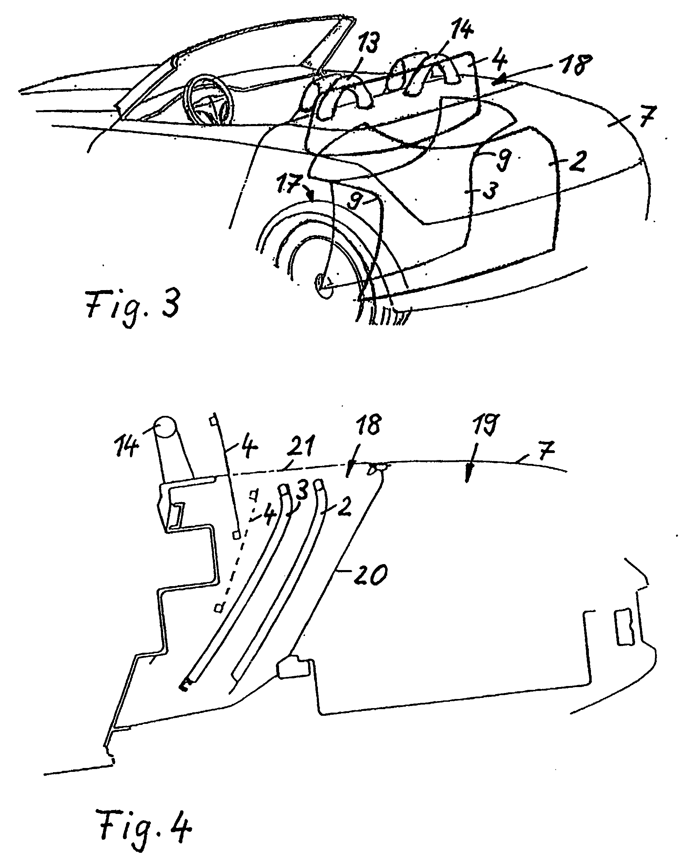

Die Heckscheibe 4 kann aus der Ausnehmung 9 in den Dachteilen 2 bzw. 3 gelöst werden und in Pfeilrichtung 10 nach unten in einen dargestellten Stauraum 18 (siehe Fig. 3 und 4) abgesenkt werden, um insbesondere Raum für die Überführung der Dachteile 2 und 3 aus der Schließposition in Cabrioletposition bzw. umgekehrt zu schaffen. Die Heckscheibe 4 weist hierfür eine eigene Heckscheibenkinematik auf, über die die Heckscheibe 4 an die Fahrzeugkarosserie angekoppelt ist und die eine Heckscheibenbewegung unabhängig von den Dachteilen 2 und 3 bzw. der die Dachteile 2 und 3 beaufschlagenden Stellkinematik erlaubt. Die Überführung der Heckscheibe 4 zwischen der Schließposition, in welcher die Heckscheibe 4 in der Ausnehmung 9 in den Dachteilen 2 und 3 aufgenommen ist und der abgesenkten Position im Stauraum erfolgt zweckmäßig ohne Öffnung des Heckdeckels 7.

Fig. 2 zeigt eine Zwischenstellung des Fahrzeugdaches bei der Überführung von Schließ- in Cabrioletposition. Die beiden Dachteile 2 und 3 werden mittels der ihnen zugeordneten Stellkinematik nach hinten in Richtung Stauraum verstellt. Hierbei werden die Dachteile 2 und 3 um eine räumliche Achse verschwenkt, welche aus zwei Einzelrotationen zum einen um eine Querachse quer zur Fahrzeuglängsachse und zum anderen um eine Hochachse zusammengesetzt werden kann und beide Einzeldrehungen etwa 90° betragen. Die aus den Einzeldrehungen zusammengesetzte räumliche Schwenkbewegung der Dachteile 2 und 3 ist in Fig. 2 mit Pfeilrichtung 11 bzw. 12 gekennzeichnet. Diese räumliche Schwenkbewegung hat zur Folge, dass die Dachteile 2 und 3 im Stauraum in Querrichtung aufrecht stehend abgelegt werden und unmittelbar hintereinander liegen. Während der Überführungsbewegung der Dachteile 2 und 3 in die Ablage- bzw. Cabrioletposition verharrt die Heckscheibe 4 in ihrer abgesenkten Lage im Stauraum, wobei die Dachteile 2 und 3 unmittelbar hinter der Heckscheibe abgelegt werden. Die Überführung der Dachteile 2 und 3 in den Stauraum kann bei geschlossenem Heckdeckel 7 erfolgen. Der Stauraum befindet sich unmittelbar hinter Überrollbügeln 13 bzw. 14, die jeweils Fahrersitzen 15 und 16 zugeordnet sind, und vor dem Kofferraum des Fahrzeugs.

In Fig. 3 ist das Fahrzeugdach in Cabrioletstellung dargestellt, in welcher die Dachteile 2 und 3 im Stauraum 18 abgelegt sind, welcher sich in einem Bereich zwischen dem Kofferraum, der vom Heckdeckel 7 verschlossen ist, und den Überrollbügeln 13 und 14 erstreckt. Die Heckscheibe 4 befindet sich in ihrer aufgestellten Position unmittelbar hinter den Überrollbügeln 13 und 14 und übernimmt die Funktion eines Windschotts. Die Dachteile 2 und 3 sind vollständig im Stauraum 18 abgelegt und befinden sich unterhalb der Karosserielinie. Auf Grund der in Fig. 2 beschriebenen räumlichen Schwenkbewegung der Dachteile bei der Überführung von Schließ- in Cabrioletposition befinden sich die Ausnehmungen 9 in jedem Dachteil 2 bzw. 3 unmittelbar im Bereich von Radkästen 17, welche in den Stauraum 18 einragen. Dadurch übergreifen die Dachteile 2 und 3 die Radkästen 17 links und rechts in platzsparender Weise.

Die Bewegung der Dachteile 2 und 3 bei der Überführung von Schließ- in Cabrioletposition erfolgt spiegelsymmetrisch zur Längs-Mittelebene des Fahrzeugs, so dass in der abgelegten Stellung im Stauraum 18 die Ausnehmung 9 jedes Dachteils 2 bzw. 3 jeweils den zugeordneten Radkasten 17 aufnimmt und das betreffende Dachteil diesen Radkasten übergreift.

Fig. 4 ist zu entnehmen, dass der Stauraum 18 über eine Blende 20 vom Kofferraum 19 abgeteilt ist, wobei die Blende 20 in Schließstellung des Fahrzeugdaches herausgenommen.oder in Öffnungsstellung verschwenkt werden kann, um das nutzbare Kofferraumvolumen zu vergrößern. Der Stauraum 18 kann gegebenenfalls nach oben von einer Persenning 21 abgedeckt sein.

Die Heckscheibe 4 ist zwischen der strichliert dargestellten, in den Stauraum 18 abgesenkten Position und der mit durchgezogenem Strich gezeichneten, aufgestellten Position zu verstellen, in der die Heckscheibe eine Windschottfunktion übernimmt. Die Verstellung zwischen abgesenkter und aufgestellter Position erfolgt mit Hilfe einer eigenen Heckscheibenkinematik unabhängig von der Stellbewegung der Dachteile 2 und 3. In abgesenkter Position der Heckscheibe 4 schließen sich in Cabrioletposition zunächst das Dachteil 3 und schließlich das Dachteil 2 an.

In Cabrioletposition des Fahrzeugdaches kann die Heckscheibe 4 nach oben in Windschottstellung versetzt werden. Es kann gegebenenfalls aber auch zweckmäßig sein, die Heckscheibe in Cabrioletposition in ihrer abgesenkten Position im Stauraum 18 zu belassen.

Außerdem kann es zweckmäßig sein, mehr als zwei längsgeteilte Dachteile vorzusehen. Es kann auch vorteilhaft sein, dass sich jedes Dachteil in Fahrzeuglängsrichtung nur über eine Teillänge des Fahrzeugdaches erstreckt.

## Patentansprüche

1. Cabriolet-Fahrzeug mit einem Hardtop-Fahrzeugdach, das zwischen einer den Fahrzeuginnenraum überdeckenden Schließposition und einer Cabrioletposition verstellbar ist, mit einer Heckscheibe (4), die in Schließposition in das Fahrzeugdach (1) integriert und in Cabrioletposition aus einer Ausnehmung (9) im Fahrzeugdach (1) herauslösbar ist und eine aufrechte Funktionsstellung einnehmen kann, in der die Heckscheibe (4) ein Windschott bildet, wobei die Heckscheibe (4) in Cabrioletposition in eine abgesenkte Lage zu verstellen ist,
**dadurch gekennzeichnet,**
**dass** die Heckscheibe (4) und zwei starre Dachteile (2 und 3) des Fahrzeugdaches (1) in Cabrioletposition in Fahrzeuglängsrichtung hintereinanderliegend im Stauraum (18) ablegbar sind.

2. Cabriolet-Fahrzeug nach Anspruch 1,
**dadurch gekennzeichnet,**
**dass** die Heckscheibe (4) eine eigene Heckscheibenkinematik aufweist, die unabhängig von den Dachteilen (2 und 3) bzw. einer Dachteil-Stellkinematik ausgebildet und unmittelbar an die Fahrzeugkarosserie angekoppelt ist.

3. Cabriolet-Fahrzeug nach Anspruch 1 oder 2,
**dadurch gekennzeichnet,**
**dass** die Heckscheibe (4) in Schließposition von den Dachteilen (2 und 3) umgriffen und in einer Ausnehmung (9) in den Dachteilen (2 und 3) aufgenommen ist.

4. Cabriolet-Fahrzeug nach Anspruch 3,
**dadurch gekennzeichnet,**
**dass** jedes Dachteil (2 bzw. 3) die Heckscheibe (4) in Schließposition des Fahrzeugdaches (1) an deren Seitenkante und teilweise an deren Oberkante umgreift.

5. Cabriolet-Fahrzeug nach Anspruch 4,
**dadurch gekennzeichnet,**
**dass** ein die Heckscheibe (4) an deren Seitenkante übergreifender Abschnitt im Dachteil (2 bzw. 3) eine C-Säule (8) bildet.

6. Cabriolet-Fahrzeug nach einem der Ansprüche 3 bis 5,
**dadurch gekennzeichnet,**
**dass** die Dachteile (2 und 3) in Cabrioletposition in der Weise im Stauraum (18) abgelegt sind, dass die Heckscheiben-Ausnehmung (9) einen in den Stauraum (18) einragenden Radkasten (17) des Fahrzeugs übergreift.

7. Cabriolet-Fahrzeug nach einem der Ansprüche 1 bis 6,
**dadurch gekennzeichnet,**
**dass** in Schließposition sich jedes Dachteil (2 bzw. 3) in Fahrzeuglängsrichtung über den gesamten Fahrzeuginnenraum erstreckt.

## Claims

1. Cabriolet vehicle having a hardtop vehicle roof which can be moved between a closed position covering the vehicle interior and an open-top position, and having a rear window (4) which is integrated in the vehicle roof (1) in the closed position, and, in the open-top position, can be released from a recess (9) in the vehicle roof (1) and can take up an upright functional position in which the rear window (4) forms a wind deflector, with the rear window (4) having to be moved into a lowered position in the open-top position, **characterized in that**, in the open-top position, the rear window (4) and two rigid roof parts (2 and 3) of the vehicle roof (1) can be deposited located one behind another in the longitudinal direction of the vehicle in the storage space (18).

2. Cabriolet vehicle according to Claim 1, **characterized in that** the rear window (4) has its own rear-window kinematics formed independently of the roof parts (2 and 3) or a roof-part adjusting kinematics and coupled directly to the vehicle body.

3. Cabriolet vehicle according to Claim 1 or 2, **characterized in that**, in the closed position, the rear window (4) is surrounded by the roof parts (2 and 3) and is held in a recess (9) in the roof parts (2 and 3).

4. Cabriolet vehicle according to Claim 3, **characterized in that**, in the closed position of the vehicle roof (1), each roof part (2 or 3) engages around the rear window (4) on its side edge and partially on its upper edge.

5. Cabriolet vehicle according to Claim 4, **characterized in that** a section in the roof part (2 or 3), which section engages over the rear window (4) on its side edge, forms a C pillar (8).

6. Cabriolet vehicle according to one of Claims 3 to 5, **characterized in that**, in the open-top position, the roof parts (2 and 3) are deposited in the storage space (18) in such a manner that the rear-window recess (9) engages over a wheel arch (17) of the vehicle, the said arch protruding into the storage space (18).

7. Cabriolet vehicle according to one of Claims 1 to 6, **characterized in that**, in the closed position, each roof part (2 or 3) extends in the longitudinal direction of the vehicle over the entire vehicle interior.

## Revendications

1. Véhicule convertible avec un pavillon rigide amovible, qui peut être déplacé entre une position de fermeture recouvrant l'espace intérieur du véhicule et une position cabriolet, comprenant une lunette arrière (4) qui est intégrée en position de fermeture dans le pavillon (1) du véhicule et qui peut être délogée d'une partie creuse (9) ménagée dans le pavillon (1) du véhicule en position cabriolet et prendre une position redressée de service dans laquelle la lunette arrière (4) forme un déflecteur de vent, la lunette arrière (4) devant être déplacée dans une position abaissée pour occuper la position cabriolet,
**caractérisé en ce que**
la lunette arrière (4) et deux éléments de pavillon rigides (2 et 3) du pavillon (1) du véhicule peuvent être déposés l'un derrière l'autre en position cabriolet dans l'espace de rangement (18), dans le sens de la longueur du véhicule.

2. Véhicule convertible suivant la revendication 1,
**caractérisé en ce que**
la lunette arrière (4) présente une cinématique propre à la lunette arrière qui est indépendante des éléments de pavillon (2 et 3) ou d'une cinématique de positionnement des éléments de pavillon et est accouplée directement à la carrosserie du véhicule.

3. Véhicule convertible suivant la revendication 1 ou 2,
**caractérisé en ce que**
la lunette arrière (4) est enveloppée en position de fermeture par les éléments de pavillon (2 et 3) et est logée dans une partie creuse (9) prévue dans les éléments de pavillon (2 et 3).

4. Véhicule convertible suivant la revendication 3,
**caractérisé en ce que**
dans la position de fermeture du pavillon (1) du véhicule, chaque élément de pavillon (2 et 3) enveloppe la lunette arrière (4) au niveau de son arête latérale et en partie au niveau de son arête supérieure.

5. Véhicule convertible suivant la revendication 4,
**caractérisé en ce**
**qu'**une portion de l'élément de pavillon (2 et 3) enserrant la lunette arrière (4) au niveau de son arête latérale forme un pied-droit en C (8).

6. Véhicule convertible suivant l'une des revendications 3 à 5,
**caractérisé en ce que**
dans la position cabriolet, les éléments de pavillon (2 et 3) sont déposés de telle façon dans l'espace de rangement (18) que la partie creuse (9) recevant la lunette arrière vienne recouvrir une contre-aile (17) du véhicule qui fait irruption dans l'espace de rangement (18).

7. Véhicule convertible suivant l'une des revendications 1 à 6,
**caractérisé en ce que**
dans la position de fermeture, chaque élément de pavillon (2 et 3) s'étend sur tout l'espace intérieur du véhicule dans le sens de la longueur du véhicule.
